Europäisches Patentamt

European Patent Office

Office européen des brevets

(19)

(11) **EP 0 896 446 A1**

(12) **EUROPÄISCHE PATENTANMELDUNG**

(43) Veröffentlichungstag:
**10.02.1999 Patentblatt 1999/06**

(51) Int. Cl.6: **H04B 13/00**

(21) Anmeldenummer: 97113703.9

(22) Anmeldetag: **07.08.1997**

(84) Benannte Vertragsstaaten:
**AT BE CH DE DK ES FI FR GB GR IE IT LI LU MC NL PT SE**

(71) Anmelder: **Schroll, Egidio**
**83368 St. Georgen (DE)**

(72) Erfinder: **Schroll, Egidio**
**83368 St. Georgen (DE)**

(54) **Daten- bzw. Informationsübertragung mit hoher Geschwindigkeit**

(57) Das gesamte System besteht aus einem Trägersender, einem Absorber und einem Empfänger. Das konstante Signal, das der Trägersender sendet, wird vom Absorber verändert und fast gleichzeitig vom Empfänger empfangen. In dieser Veränderung liegt die Information.

EP 0 896 446 A1

**Beschreibung**

Die Erfindung betrifft das Übertragen von Daten bzw. Informationen von einem Ort zu einem Anderen. Die zu übertragenden Informationen werden nicht wie üblich mit einem Sender und einem Empfänger übertragen, sondern mit einem Trägersender, einem Absorber und einem Empfänger. Die Information wird von dem Absorber zum Empfänger mit hoher Geschwindigkeit übertragen. Daten bzw. Informationen, die mit dieser Methode übertragen werden, haben einen hohen Grad an Abhörsicherheit, weil die Information im Raum zwischen Absorber und Empfänger, sowie ausserhalb davon, nicht vorliegt.

Als Geschwindigkeit ist nicht der Durchsatz gemeint (Anzahl Informationen pro Sekunde), sondern die Geschwindigkeit des Ortswechsels der Daten.

Diese Geschwindigkeit kann, je nach Systemaufbau, über eine Milliarde mal "c" (Lichtgeschwindigkeit) sein, also liegt bei „sehr nahe unendlich".

Der heutige Stand der Physik kann diesen Vorgang nicht erklären. Um den Vorgang, nach dem heutigen Stand der Physik verständlich zu machen, bedienen wir uns einer theoretischen Welle mit Ausbreitungsgeschwindigkeit "c" (Lichtgeschwindigkeit).

Diese Welle wird der Informations-Träger sein. Diese Annahme hat keinen Einfluß auf das Prinzip der Erfindung. Sie dient nur dem besseren Verständniss.

**Prinzip**

Die Übertragung erfolgt über eine spezielle konstante Welle. Diese Welle wird von einem Sender gesendet und hat die Ausbreitungsgeschwindigkeit "c" = Lichtgeschwindigkeit. Diese Welle ist speziell, weil sie sich an jedem beliebigen Ort teilweise oder ganz absorbieren (vernichten) läßt.

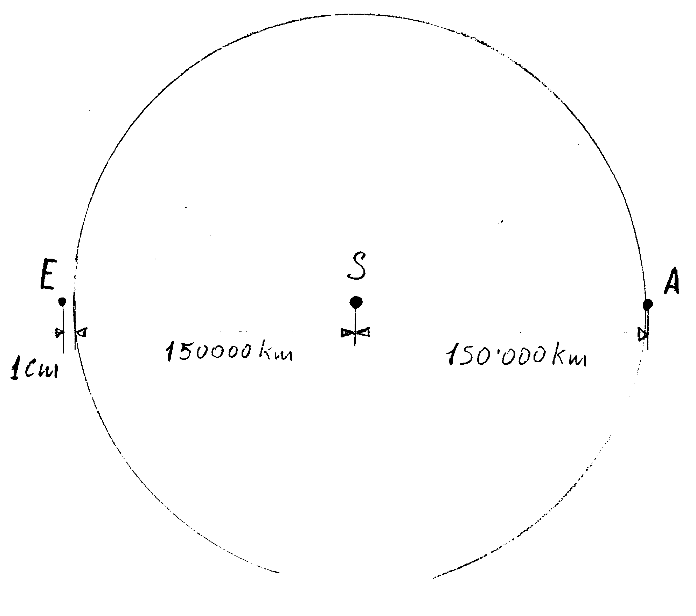

Siehe auch das Beispiel in der beiliegenden Zeichnung.

Der Sender "S" sendet ständig eine konstante Welle. Auf 150000 km Entfernung liegt der Absorber 'A'. Dieser Absorber ist in der Lage, wie oben erwähnt, die Welle zum Teil oder völlig zu vernichten. Auf der gegenüberliegenden Seite ist der Empfänger 'E' auf 150000 km plus 1 cm (Centimeter).

'E' empfängt die Welle, wenn 'A' sie nicht vernichtet, oder den Rest, den 'A' nicht absorbiert hat. Der Abstand 'A - E' ist ca. 300000 km.

Eine normale Informationsübertragung von 'A' nach 'E' würde zwischen Senden bei 'A' und Empfangen bei 'E' ca. 1 Sekunde dauern.

Diese Methode benötigt aber:

$$\frac{0.00001 \text{ km (1 cm)}}{300000 \text{ km/s}} = 3.33 * 10^{-10} \text{ Sekunden}$$

und die Geschwindigkeit wäre:

$$\frac{300000 \text{ km (Abstand)}}{3.33 * 10^{-10}} = 9 * 10^{+15} \text{ km/s}$$

also sehr nahe unendlich.

**Patentansprüche**

1.   Die Übertragung von Daten bzw. Informationen in analoger oder digitaler Form, die das Prinzip des Senders, Absorbers und Empfängers benutzt, gleichgültig welcher Informations-Träger angewendet wird.

A

150'000 km

S

150000 km

E

1 Cm

**Europäisches Patentamt**

# EUROPÄISCHER RECHERCHENBERICHT

Nummer der Anmeldung

EP 97 11 3703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | J.F.COCHRAN ET AL: "Microwave Transmission through ferromagnetic metals" IEEE TRANSACTIONS ON MAGNETICS., Bd. mag-16, Nr. 5, September 1980, NEW YORK US, Seiten 660-665, XP002053132 * Seite 660, linke Spalte, Absatz 2 - Seite 661, linke Spalte, Absatz 1; Abbildung 1 * | 1 | H04B13/00 |
| A | DE 39 08 441 A (POISEL OTTO KARL) * Zusammenfassung; Anspruch 1; Abbildung 1 * | 1 | |
| A | EP 0 736 984 A (BAUROV JURY ALEXEEVICH ;OGARKOV VADIM MIKHAILOVICH (RU)) * Zusammenfassung; Anspruch 1 * | 1 | |
| | | | **RECHERCHIERTE SACHGEBIETE (Int.Cl.6)**<br><br>H04B |

Der vorliegende Recherchenbericht wurde für alle Patentansprüche erstellt

| Recherchenort | Abschlußdatum der Recherche | Prüfer |
|---|---|---|
| DEN HAAG | 23.Januar 1998 | Goudelis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)